# EUROPÄISCHE PATENTSCHRIFT

(11) **EP 1 594 624 B1**
(45) Veröffentlichungstag und Bekanntmachung des Hinweises auf die Patenterteilung: **30.09.2009**
(21) Anmeldenummer: 04711363.4
(22) Anmeldetag: 16.02.2004
(51) Int. Cl.: B05C 11/10, D21G 9/00, G05D 5/03

(54) **VERFAHREN ZUR ERMITTLUNG DES OBERFLÄCHENVERLAUFS EINES BEWEGTEN BANDES**
METHOD FOR DETERMINING THE SURFACE PROFILE OF A MOVING STRIP
PROCEDE POUR EVALUER L'ALLURE DE LA SURFACE D'UNE BANDE DE MATIERE EN MOUVEMENT

(30) Priorität: 18.02.2003 DE 10306837
(43) Veröffentlichungstag der Anmeldung: 16.11.2005
(73) Patentinhaber: Betriebsforschungsinstitut VDEh, Institut für angewandte Forschung GmbH, 40237 Düsseldorf (DE); IMS Messsysteme GmbH, 42579 Heiligenhaus (DE)
(72) Erfinder: JELALI, Mohieddine, 47269 Duisburg (DE); WOLFF, Andreas, 40479 Düsseldorf (DE); MÜLLER, Ulrich, 40789 Monheim a. Rhein (DE); FACKERT, Rainer, 56584 Meinborn (DE)
(74) Vertreter: Tilmann, Max Wilhelm
(86) Internationale Anmeldenummer: PCT/EP2004/001436
(87) Internationale Veröffentlichungsnummer: WO 2004/073887

(56) Entgegenhaltungen:
- EP-A- 0 307 076
- US-A1- 2003 014 147
- US-B1- 6 493 601

## Beschreibung

Die Erfindung betrifft ein Verfahren zur Ermittlung des Oberflächenverlaufs eines durch eine Vorrichtung geförderten, durch mindestens ein Stellglied beeinflußten lackbeschichteten Bandes, sowie ein Stellgrößenregelverfahren für einen solchen Prozeß.

Durch kontinuierliche Beschichtungsverfahren lassen sich Oberflächen erzeugen, die die Gebrauchseigenschaften und den Korrosionswiderstand von Blechen entscheidend verbessern. Daher kommt einer solchen Oberflächenbehandlung von Bändern in der Automobil-, Hausgeräte-, Bau- und Ver-packungsindustrie eine große Bedeutung zu. Hier werden als kontinuierliche Beschichtungsverfahren insbesondere galvanische Beschichtungsverfahren, Feuerverzinken, Folien- und Lackbeschichten von Stahl- und Aluminiumbändern durchgeführt.

Bei der Lackbeschichtung von Bändern erfolgt der Auftrag des Lackes in der Regel im Walzenauftragsverfahren. Dabei wird die unbeschichtete Bandseite mittels eine Mehrrollensystems beschichtet. Beispielsweise kann ein Vierrollensystem aus einer Auftragsrolle, einer Schöpfrolle, einer Dosierrolle und einer Transportrolle bestehen. Durch die Schöpfrolle wird Lack aus dem Lackbad aufgenommen. Die Dosierrolle nimmt einen Teil des aufgenommen Lacks von der Schöpfrolle ab, so daß nur die gewünschte Menge Lack mit der Schöpfrolle zur Auftragsrolle gefördert wird. Die Auftragsrolle nimmt diese Menge Lack ab und trägt sie auf das mit der Transportrolle geförderte Band auf. Bei der Beschichtung eines Bandes ist eines der erwünschten Qualitätsziele die Höhe und Gleichmäßigkeit des aufgetragenen Beschichtungsmaterials.

Aus US 5,409,732 ist ein Regelungsverfahren für eine Beschichtungsanlage bekannt. Dort wird die Beschichtungsflüssigkeit im Überfluß auf das Band aufgebracht. Die tatsächliche Beschichtungsdicke wird durch einen Abstreifer eingestellt, der überschüssige Beschichtungsflüssigkeit von dem Band abstreift. Das Regelungsverfahren sieht einen dem Abstreifer nachgeschalteten Sensor vor, der als optischer Dickensensor die Dicke der Beschichtungsschicht mißt. In Abhängigkeit des Meßergebnisses wird die Position des Abstreifers eingestellt, um die gewünschte Beschichtungsdicke einzuregeln. Dieses Verfahren ist insoweit nachteilig, als daß die Beschichtungsdicke nur an einem Referenzpunkt des Bandes, beispielsweise in der Bandmitte, ermittelt wird. So ist es mit diesen Verfahren nicht möglich, eine konstante Beschichtungsdicke über die gesamte Bandbreite einzuregeln, da Informationen über die Beschichtungsdicke an Bandpunkten neben dem Referenzpunkt nicht vorliegen.

Eine Beschichtungsdickenmessung an über die Bandbreite verteilten Meßpunkten wird bei einem adaptiven Regelungsverfahren für einen Galvanisierungsprozeß in "Adaptive control of hot-dip galvanizing", Desong Chen, Automatica, Volume 31, page 715 bis 733, 1995, beschrieben. Hier wird das Beschichtungsdickenquerprofil mit einem traversierenden Meßsystem ermittelt. Dabei fährt ein Meßkopf von einer Bandkante bis zur gegenüberliegenden Bandkante. Das Profil wird an verschiedenen Breitenpositionen gemessen, wobei jedoch durch die fortlaufende Bandbewegung die Breitenpositionen an verschiedenen Bandlängenpositionen und nicht an der gleichen Bandlängenposition ermittelt werden. Bei Erreichen der Bandkante wird das gemessene Profil aufbereitet, um es einer Regelung zuzuführen.

Das vorbeschriebene Regelungsverfahren vernachlässigt, daß sich bereits während des Traversiervorgangs das Beschichtungsdickenprofil durch einen Reglereingriff verändert haben kann und daß es dadurch zu einer Fehlinterpretation des Profils kommen kann. Zwar kann ein anfänglich schräges (keilförmiges) Beschichtungsdickenprofil durch einen Stelleingriff in ein ebenes (rechteckförmiges) Profil geändert werden. Jedoch können die Stellgrößen auf den Stelleingriff nicht beliebig schnell reagieren, so daß die Keilform während der Traversierung nur allmählich in ein ebenes Profil übergeht. Dadurch wird das Profil als Ergebnis einer Kombination aus cross-bow, Schräglage und veränderter Mittellage interpretiert. Dies führt zu falschen Stelleingriffen und damit zu einer verminderten Qualität des Beschichtungsdickenprofils oder sogar zur Instabilität des Reglers.

Aus dem Artikel "Estimation of Cross Directional Properties: Scanning Versus Stationary Sensors", Tyler, Morari, A.I.Ch.E Journal 43, 846,1997, ist es bekannt, die Lackschichtdicke sofort nach der Messung an einer Bandbreitenposition und Längenposition zu schätzen. Hierzu wird eine "geliftete" Riccati-Gleichung gelöst. Voraussetzung hierfür ist, daß die Abtastung des Lackschichtdickenprofisl nach einem festen periodischen Muster erfolgt. Nachteilig hierbei ist, daß diese periodische Abtastung nicht immer gewährleistet werde kann. So kann es sein, dass aus technischen Gründen ein Messpunkt nicht zur Verfügung steht. Außerdem ist beim Einsatz eines solchen Filters in einem adaptiven Regelungskonzept zu jedem Abtastschritt eine hoch dimensionale "geliftete" Riccati-Gleichung zu lösen, um das Filter adaptieren zu können. Hierfür ist eine große Rechenleistung erforderlich.

Aus US 2003/0014147 A1 ist ein Verfahren zur Ermittlung von Eigenschaften eines Bandes, beispielsweise einer Papierbahn bekannt. Dabei wird die Eigenschaft mittels Sensoren, die unter Bildung eines Sensor-Arrays quer zur Bandlaufrichtung versetzt zueinander angeordnet sind, an den den Sensoren zugeordneten Messpunkten auf der Papierbahn gemessen. Zur Kompensation des Drifts der Sensoren ist in Bandlaufrichtung ein traversierender Sensor vorgesehen. Der traversierende Sensor kann bei Überschreiten der Bandkante einer Eichung zugeführt werden. Während der Traverse über das Band werden die Messwerte des traversierenden, geeichten Sensors mit dem Messwert des an gleicher Stelle in Bankquerrichtung angeordneten Sensors des Sensor-Array verglichen und für den ermittelten Drift ein Kompensationsfaktor für den jeweiligen Sensor des Sensor-Arrays bereitgestellt. Zum Vergleich des Messwerts des jeweiligen Sensors des Sensor-Arrays mit dem an dem vergleichbaren Messpunkt gemessenen Messwert des traversierenden geeichten Sensors schlägt US 2003/0014147 A1 den Einsatz von Kalman-Filtern vor. Dabei ist für jeden Sensor des Sensor-Arrays ein eigener Kalman-Filter vorgesehen. Es wird also eine der Anzahl der Sensoren des Sensor-Arrays gleiche Anzahl von Kalman-Filtern vorgesehen.

US 6 493 601 und EP 03 07 076 offenbaren auch ein Verfahren zur Ermittlung von Eigenschaften eines Bandes mittels eines Kalmanfilters.

Vor diesem Hintergrund liegt der Erfindung die Aufgabe zugrunde, ein präziseres Verfahren zur Ermittlung des Oberflächenverlaufs eines durch eine Vorrichtung geförderten beschichteten Bandes sowie ein präzises Stellgrößenregelverfahren vorzuschlagen.

Diese Aufgabe wird durch den Gegenstand der nebengeordneten Ansprüche gelöst. Vorteilhafte Ausgestaltungen der Erfindung sind in den Unteransprüchen angegeben.

Der Erfindung liegt der Gedanke zugrunde, bei der Berechnung einer Oberflächenverlaufsgleichung aus ermittelten Distanzwerten ein schaltendes Kalman-Filter einzusetzen. Diese Vorgehensweise erlaubt es, eine Schätzung des Oberflächenverlaufs zu erstellen, sobald ein neuer Messwert vorliegt. Das schaltende Kalman-Filter kann ferner die Schätzung des Oberflächenverlaufs basierend auf periodischen oder nichtperiodischen Messungen durchführen.

Als schaltendes Kalman-Filter wird im Rahmen dieser Erfindung insbesondere ein Filter verstanden, das in Abhängigkeit einer Schaltfunktion zwischen mehreren linearen dynamischen Systemen schaltet. Das schaltende Kalmanfilter findet eine stationäre Lösung für die Matrix-Riccatti-Gleichungen der einzelnen Systeme, wobei das Auffinden der stationären Lösung solange fortgesetzt wird, wie der neu hinzukommende Messwertvektor dem System angehört. Hierbei setzt sich Messwertevektor aus allen Abstandsmessungen über der Breite einer Oberfläche zusammen, die zu einem Zeitpunkt gemessen wurden. Fehlen einzelne Elemente des Messwertvektors oder kommen neu hinzu liegt ein anderes System vor und das Kalmanfilter schaltet. Die Lösung des bisherigen Systems wird als Anfangswerte für die Lösung des neuen Filterproblems herangezogen.

Die Schaltfunktion gibt an, welches System dem momentan vorliegenden Messzustand entspricht. Sie kann beispielweise angeben, das ein System anzuwenden ist, das auf Ergebnissen an allen Messpunkten oder an einigen Messpunkten über Breite basiert.

Sie kann angeben, daß ein System zu verwenden ist, bei dem einzelne Messungen von spezifizierte Messpunkten nicht vorliegen. Besonders bevorzugt wird für jede Kombination von vorhandenen und nicht vorhandenen Messungen einer über die Breite des Bandes erfolgten Messreihe ein System angelegt, dessen Lösung vorangetrieben wird, wenn aufgrund der vorliegenden Messungen, beispielsweise der letzten Messreihe über die Breite des Bandes, dieses System zu verwenden ist. Die Schaltfunktion kann zudem ein Schalten zwischen einzelnen stückweise linearen Modellen für verschiedene Betriebsbedingungen bewirken, wenn für einzelne Betriebsbedingungsbereiche eigene Systeme angelegt werden.

Das schaltende Kalman-Filter führt durch das Schalten zwischen Systemen zu einer globalen Stabilität und Konvergenz. Fehlende Messergebnisse führen nicht, wie bei der Verwendung eines einzigen Systems zur Instabilität des Systems. Außerdem können stückweise lineare Modelle für nicht-lineare Regelstrecken eingesetzt werden.

Eines der verwendeten Systeme kann das System sein, das eingesetzt wird, wenn nur Messwerte vom Messpunkt in der Mitte des Bandes vorliegen. Zur Erzeugung von Messwerten auf deren Grundlage eine stationäre Lösung für dieses Systems generiert wird, kann eine in der Walzenvorrichtung bewegliche Messvorrichtung über der Mitte des Bandes gehalten werden und dort Messungen durchführen.

Bei dem erfindungsgemäßen Verfahren wird somit zur Ermittlung des Oberflächenverlaufs an quer zur Bandlaufrichtung versetzt zueinander angeordneten Meßpunkten die Distanz zwischen dem Sensor und der Oberfläche des Bandes zu ermittelt. Dabei können die Distanzwerte an regelmäßig oder unregelmäßig über die Bandbreite verteilten Messpunkten ermittelt werden. Nach Durchführung mindestens einer Messung werden die charakterisierenden Werte einer Oberflächenverlaufsgleichung mittels des vorbeschriebenen schaltenden Kalman-Filters geschätzt.

Im Sinne dieser Erfindung ist unter dem Oberflächenverlauf insbesondere der Verlauf der Schichtdicke einer auf ein Band aufgebrachten Beschichtung, beispielsweise eines Lacks, zu verstehen. Zur Ermittlung der Schichtdicke werden insbesondere optische Meßverfahren eingesetzt, die auf einem Mustererkennungsverfahren basieren. Diese gelten im Sinne der Erfindung auch als Distanzmessungen, auch wenn hierdurch nicht die Distanz zwischen dem Sensor und der Bandoberfläche, sondern unmittelbar die Schichtdicke, beispielsweise eine Lackschichtdicke, gemessen wird. Es können aber auch andere bekannte Methoden zur Ermittlung einer Schichtdicke oder einer Distanz zwischen einem Sensor und einer Bandoberfläche verwendet werden.

Das durch die Beschichtungsvorrichtung geförderte Band kann ein Metallband sein.

Die Messung an quer zur Bandlaufrichtung versetzt zueinander angeordneten Messpunkten kann durch Bewegen eines Distanzsensors, vorzugsweise eines an der Beschichtungsanlage beweglich angebrachten Distanzsensors erfolgen. Alternativ kann eine Vielzahl von quer zur Bandlaufrichtung versetzt zueinander angeordneten Messpunkten vorgesehen sein. Dies können beispielsweise stationär oder an unterschiedlichen Winkelpositionen einer sich drehenden Welle angeordnet sein.

Das Ermitteln der an quer zur Bandlaufrichtung versetzt zueinander angeordneten Meßpunkten kann auch beinhalten, zunächst nur Messwerte an einer bestimmten Position zu ermitteln werden.

Als Oberflächenverlaufsgleichung kann insbesondere ein Polynom verwendet werden. Als charakterisierende Werte einer Oberflächenverlaufsgleichung im Sinne der Erfindung werden die Werte, bzw. Konstanten verstanden, die eine Oberflächenverlaufsgleichung allgemeiner Form (beispielsweise Polynomtyp) konkretisieren.

Das erfindungsgemäße Ermittlungsverfahren bietet den Vorteil, daß der Oberflächenverlauf auch dann noch hinreichend präzise ermittelt werden kann, wenn einzelne Meßwerte der beabstandet zueinander angeordneten Messpunkte nicht vorliegen, beispielsweise wenn Schäden des Distanzsensors bestehen.

Nach einer bevorzugten Ausführungsform des erfindungsgemäßen Verfahrens werden die charakterisierenden Werte der Oberflächenverlaufsgleichung nach jeder Ermittlung eines Distanzwerts berechnet. Dies ermöglicht eine genauere Stellgrößenregelung, da der Ist-Verlauf der Oberfläche in kürzeren Intervallen geschätzt wird, als wenn nur beim Erreichen der gegenüberliegenden Bandkante eine Bestimmung des Oberflächenverlaufs erfolgt.

Um die ermittelte Oberflächenverlaufsgleichung besser handhaben zu können, kann diese durch optimale orthogonale Funktionssysteme, wie ein Chebyschew-Polynom, ein Gramm-Polynom oder andere orthogonale Polynome in orthogonale Komponenten zerlegt werden. Diese Funktionssysteme können entweder fest gewählt werden oder anhand der Regelabweichung jeweils geeignet bestimmt werden.

Das zuvor beschriebene Verfahren zur Ermittlung des Oberflächenverlaufs wird vorteilhaft bei einem erfindungsgemäßen Stellgrößenregelverfahren für einen Beschichtungsprozeß eingesetzt, das folgende Schritte aufweist:
- Festlegen eines Soll-Oberflächenverlaufs,
- Ermittlung eines Ist-Oberflächenverlaufs mit dem zuvor beschriebenen Verfahren,
- Ermittlung einer Regelgröße durch Vergleich eines durch ein online-fähiges Modell ermittelten Modell-Oberflächenverlaufs mit dem Ist-Oberflächenverlauf,
- Ermittlung einer Regeldifferenz durch Vergleich der Regelgröße mit dem Soll-Oberflächenverlauf
- Einstellen der Stellgröße mittels Ausgangssignalen eines Reglers, dessen Eingangssignal die Regeldifferenz ist.

Vorzugsweise wird zur Ermittlung der Regeldifferenz der Soll-Oberflächenverlauf in orthogonale Komponenten zerlegt. Gemäß einer bevorzugten Ausführungsform wird zur Ermittlung der Regelgröße der Modell-Oberflächenverlauf und der Ist-Oberflächenverlauf in orthogonale Komponenten zerlegt. Durch die Zerlegung in orthogonale Komponenten wird der Vergleich der einzelnen Oberflächenverlaufs-Gleichungen mit geringem Aufwand möglich, so daß die Rechenzeit hierfür minimiert werden kann.

Gemäß einer bevorzugten Ausführungsform wird ein Mehrgrößenregler mit einem online-fähigen Modell und einer dynamischen Optimierung unter Einbeziehung von Stellgrößenbeschränkungen und vorhergesagtem Regelgrös-senverlauf verwendet. Insbesondere kann zudem ein Verfahren zur Berücksichtigung der Randbedingungen und der gewichteten Aufweichung der Randbedingungen in Abhängigkeit von ihrer Wichtigkeit für den störungsfreien Betrieb des Beschichtungsprozesses verwendet werden. Hierdurch kann die Feasibility des Optimierungsproblems gewahrt werden.

Vorzugsweise wird beim Initiieren des Verfahrens die Stellgröße zunächst nach den Vorgaben eines Set-up-Modells eingestellt. Dieses Set-up-Modell ist vorzugsweise linear oder nicht linear und weist ein Experten-System zur Berechnung des Arbeitspunktes des Beschichtungsprozesses auf. Das Expertensystem beschreibt vorzugsweise die Abhängigkeit der Stellgrößen, der Beschichtungsdicke und sonstiger Qualitätsparameter voneinander.

Bevorzugt wird nach dem Initiieren des Verfahrens zur Adaption der Regelung auf einen Referenzwert des Oberflächenverlaufs der Ist-Oberflächenverlauf zunächst nur mit Meßwerten eines Referenzpunkts ermittelt. Diese Adaption der Regelung wird vorzugsweise an der mittleren Breitenposition durchgeführt, da die Dicke in der Bandmitte ein Hauptqualitätsmerkmal ist.

Das Stellgrößenregelverfahren ferner eine Adaption einzelner oder aller online-Modelle und/oder des Set-up-Modells aufweisen. Diese Adaptionsverfahren sind vorzugsweise online-Adaptionsverfahren und sind robust gegenüber Modellstrukturfehlern und Störungen. Ferner kann ein Adaptionsverfahren zur Anpassung des schaltenden Kalman-Filters vorgesehen sein, das robust gegenüber Modellstrukturfehlern und Störungen sein kann und insbesondere den Schaltvorgang des Filters berücksichtigt. Als Regelung für den Regler, insbesondere für den Mehrgrößenregler, kann eine Kaskaden-Regelung verwendet werden. Diese kann auf einer IMC (Internal Model Control) mit eingebettetem MPC (Model Polictive Control) basieren. Vorzugsweise ist eine Prädiktion der Regelgröße vorgesehen, die in die dynamische Optimierung des Reglers einbezogen wird, und die über eine Totzeitkompensation hinausgeht.

Die Vorzüge des vorgenannten Verfahrens zur Ermittlung des Oberflächenverlaufs und des erfindungsgemäßen Stellgrößenregelverfahrens werden insbesondere bei der Regelung der Stellgrößen eines Lackbeschichtungssystems erzielt, sind aber nicht auf diese beschränkt. Besonders bevorzugt wird dabei bei der Regelung der Oberflächenverlauf (der Lackschichtdicke) der Trockenlackschicht und/oder der Naßlackschicht berücksichtigt. Ein wichtiges Qualitätsmerkmal der Lackbeschichtung ist die Trockenlackschichtdicke. Da der Trocknungsprozeß des Lacks mit der Zeit variieren kann, so daß unterschiedliche Trockenlackschichtdicken bei gleicher Naßlackschichtdicke entstehen, ist es von Vorteil, bei der Regelung sowohl die Naßlackschichtdicke als auch die Trockenlackschichtdicke zu berücksichtigen.

Die erfindungsgemäßen Verfahren können auch für die Ermittlung des Oberflächenverlaufes eines jeglichen anderen Bandes, beispielsweise eines Textilbandes oder einer Papierbahn verwendet werden.

Auch ist als Beschichtungsprozeß jegliche andere Bandbearbeitung zu verstehen, bei der Kenntnis über den Oberflächenverlauf oder Dicken-, bzw. Profilverlauf eines bewegten Bandes benötigt wird. So können die erfindungsgemäßen Verfahren auch in Walzprozessen in Walzgerüsten eingesetzt werden.

Nachfolgend wird die Erfindung anhand einer Zeichnung näher erläutert, die ein Ausführungsbeispiel zeigt. Darin zeigen:
- Fig. 1: den Grundaufbau eines Vierrollenbeschichtungssystems zur Durchführung des erfindungsgemäßen Stellgrößenregelverfahrens;
- Fig. 2: die Bewegung des Sensors des erfindungsgemäßen Verfahrens zur Ermittlung des Oberflächenverlaufs in einer Draufsicht und
- Fig. 3: das Signalflußbild einer Lackschichtdickenregelung mit dem erfindungsgemäßen Stellgrößenregelverfahren.

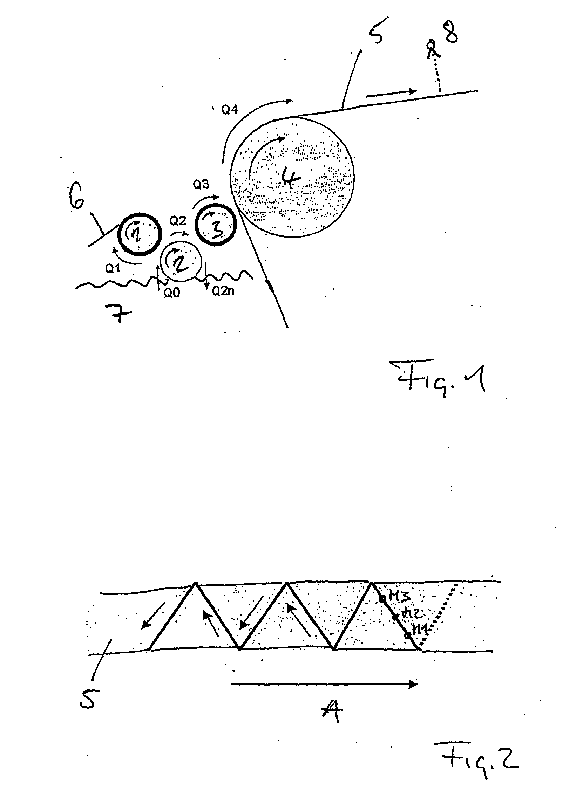

Bei der Lackbeschichtung erfolgt der Auftrag des Lacks auf das Band 5 im Walzenauftragsverfahren (Walzprozeß). Dabei wird die unbeschichtete Bandseite mittels eines Vierrollensystems beschichtet. Das Vierrollensystem besteht aus der Dosierrolle 1, der Schöpfrolle 2, der Auftragsrolle 3 und der Transportrolle 4. Eine oder mehrere Rollen können mit Gummi beschichtet sein, um dünnere Lackschichten zu erzielen. Das in Figur 1 dargestellte Beschichtungssystem wird im "Reverse-Modus" betrieben. Dabei bewegen sich alle Rollen in der Berührungszone entgegengesetzt zueinander. Durch die Schöpfrolle 2 wird ein Volumenstrom Q₀ aus dem Lackbad transportiert. Dieser wird durch die Andrückkraft (Normalkraft) der Dosierrolle 1 gegen die Schöpfrolle 2 in einen Volumenstrom Q₁ und Q₂ aufgeteilt, wobei der Volumenstrom Q₁ durch eine Klinge 6 abgestreift wird und wieder in das Lackbad 7 zurückgelangt. Der Volumenstrom Q₂ teilt sich durch die Andrückkraft zwischen Schöpfrolle 2 und Auftragsrolle 3 in einen Volumenstrom Q₂ und Q₃ auf. Q₂ wird vollständig auf das durch die Transportrolle 4 mitgeführte Metallband aufgetragen.

Der Volumenstrom Q₃, bzw. Q₄ wird durch die Anstellkräfte und die Geschwindigkeitsverhältnisse zwischen den Rollen 1 bis 4, der absoluten Bandgeschwindigkeit und der Temperatur bestimmt. Darüber hinaus beeinflussen physikalische Konstanten, wie Dichte, Kapillarzahl und Viskosität die Lackschichtdicke.

Durch die Anstellkräfte und Geschwindigkeitsverhältnisse wird die Lackschichtqualität (Rippel, Wellen, Blasen) beeinflußt. Verschiedene Kombinationen der zuvor genannten Stellgrößen können bei gleicher Lackschichtdicke unterschiedliche Lackschichtqualitäten liefern.

Zur Regelung dieser Stellgrößen wird eine Soll-Dickenprofilkurve festgelegt, die in unabhängige Komponenten zerlegt wird. Während des laufenden Beschichtungsprozesses (Walzprozesses) wird ein oberhalb des beschichteten Bandes angeordneter Sensor 8 traversierend über die Bandbreite bewegt. Wie in Figur 2 ersichtlich, wird durch die Bewegung des Bandes in die Bandlaufrichtung A und die quer dazu verlaufende Bewegung des Sensors 8 ein Zickzack-förmiges Meßmuster erzeugt. Der Meßsensor ermittelt dabei an regelmäßig über die Bandbreite verteilten Meßpunkte M1, M2, M3 die Lackoberflächenqualität. Hierzu verwendet der Sensor 8 ein optisches Meßverfahren, das mittels eines Mustererkennungsverfahrens die Lackoberflächenqualität beurteilt. Hierdurch kann auf die Lackschichtdicke geschlossen werden.

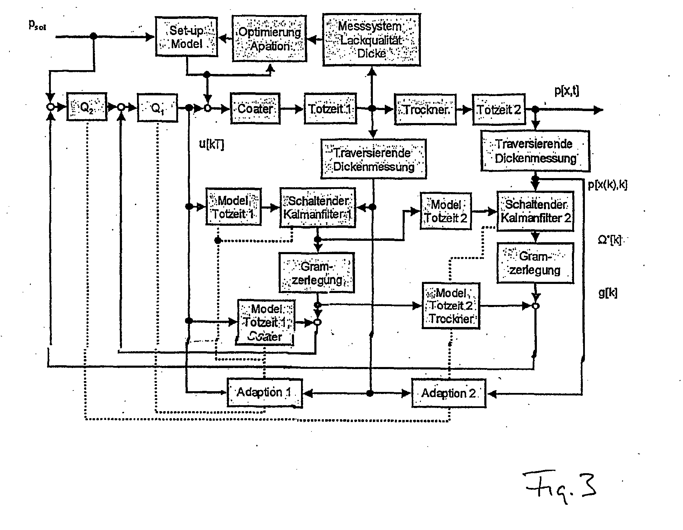

Sobald ein Meßwert vorliegt, werden unter Verwendung eines schaltenden Kalman-Filter die charakterisierenden Werte einer Oberflächenverlaufsgleichung (Polynom) ermittelt (vgl. Figur 3). Die so ermittelte Oberflächenverlaufsgleichung wird mit einer Gram-Zerlegung in optimale orthogonale Komponenten zerlegt. Die Zerlegung wird in Abhängigkeit von der Art des auftretenden Lackschichtdickenfehlers verändert, um den Fehler mit möglichst wenig Komponenten zu beschreiben und damit das Optimierungsverfahren zu vereinfachen.

Die ermittelten unabhängigen Komponenten werden mit Werten verglichen, die ein online-fähiges Modell der Beschichtungsanlage, bzw. des Trocknungsprozesses liefern. Die daraus resultierende Differenz wird als Regelgröße verwendet. Diese wird anschließend mit der in unabhängige Komponenten zerlegten Soll-Dickenprofilkurve verglichen. Die resultierende Regeldifferenz wird einem Mehrgrößenregler, bestehend aus einem online-fähigen Modell und einer dynamischen Optimierung unter Einbeziehung vom Stellgrößenbeschränkungen und vorhergesagtem Regelgrößenverlauf, zugeführt.

Zur Initiierung des Stellgrößenregelverfahrens beispielsweise nach einem Lackwechsel, wird zuerst der neue Arbeitspunkt durch ein Set-up-Modell mittels eines Optimierungsverfahrens unter Einhaltung von physikalischen und ökonomischen Randbedingungen bestimmt. Anschließend wird die Regelung aktiviert. Um die Adaption der Regelung für die mittlere Lackschichtdicke zu beschleunigen, kann der Meßkopf zu Anfang in der Bandmittenposition festgehalten werden. Sobald die Regelung ausreichend adaptiert ist, wird in den traversierenden Meßbetrieb übergegangen und die gesamte Regelung freigegeben.

Um Veränderungen im dynamischen Verhalten, verursacht durch Verschleiß (Abtrag der Gummibeschichtung auf den Rollen), Austausch von Bauteilen der Beschichtungsanlage, Änderungen der Materialeigenschaften des Lacks und des zu beschichtenden Blechs kompensieren zu können, werden die online-Modelle während des Beschichtungsvorgangs adaptiert. Das Set-up-Modell wird von Lackwechsel zu Lackwechsel adaptiert, unter Hinzunahme von Lackoberflächenqualitätsmerkmalen.

Die Anfangswerte für die Adaption können aus dem nicht-linearen Set-up-Modell bestimmt werden oder anhand einer Datenbank, in der für bestimmte Beschichtungsbedingungen Startwerte für die Adaption der dynamischen online-Modelle abgelegt werden. Dabei werden unter Beschichtungsbedingungen Parameterintervalle von Prozeßvariablen verstanden, denen dann ein Startwert zugeordnet wird.

## Patentansprüche

1. Verfahren zur Ermittlung des Oberflächenverlaufs eines durch eine Vorrichtung geförderten beschichteten Bandes (5), mittels Distanzmessungen, die quer zur Bandlaufrichtung versetzt zueinander erfolgen, mit folgenden Schritten:
- Ermitteln der Distanz zwischen dem Sensor (8) und der Oberfläche des Bandes (5) an mindestens einem Messpunkt (M1, M2, M3),
- Berechnen der charakterisierenden Werte einer Oberflächenverlaufsgleichung aus dem/den ermittelten Distanzwert(en) mittels eines schaltenden Kalmanfilters.

2. Verfahren nach Anspruch 1, **dadurch gekennzeichnet, dass** jeweils ein Distanzwert an regelmäßig über die Bandbreite verteilten Messpunkten (M1, M2, M3) ermittelt wird.

3. Verfahren nach Anspruch 1 oder 2, **dadurch gekennzeichnet, dass** nach jeder Ermittlung eines Distanzwerts die charakterisierenden Werte einer Oberflächenverlaufsgleichung berechnet werden.

4. Verfahren nach einem der Ansprüche 1 bis 3, **dadurch gekennzeichnet, dass** die Oberflächenverlaufsgleichung in orthogonale Komponenten zerlegt wird.

5. Stellgrößenregelverfahren für einen Beschichtungsprozess mit folgenden Schritten:
- Festlegen eines Soll-Oberflächenverlaufs,
- Ermittlung eines Ist-Oberflächenverlaufs mit einem Verfahren nach einem der Ansprüche 1 bis 4,
- Ermittlung einer Regelgröße durch Vergleich eines durch ein online-fähiges Modell ermittelten Modell-Oberflächenverlaufs mit dem Ist-Oberflächenverlauf,
- Ermittlung einer Regeldifferenz durch Vergleich der Regelgröße mit dem Soll-Oberflächenverlauf,
- Einstellen der Stellgröße mittels Ausgangssignalen eines Reglers, dessen Eingangssignal die Regeldifferenz ist.

6. Verfahren nach Anspruch 5, **dadurch gekennzeichnet, dass** zur Ermittlung der Regeldifferenz der Soll-Oberflächenverlauf in orthogonale Komponenten zerlegt wird.

7. Verfahren nach Anspruch 5 oder 6, **dadurch gekennzeichnet, dass** zur Ermittlung der Regelgröße der Modell-Oberflächenverlauf und der Ist-Oberflächenverlauf in orthogonale Komponenten zerlegt wird.

8. Verfahren nach einem der Ansprüche 5 bis 7, **gekennzeichnet durch** die Verwendung eines Mehrgrößenreglers mit einem online-fähigen Modell und einer dynamische Optimierung unter Einbeziehung von Stellgrößenbeschränkungen und vorhergesagtem Regelgrößenverlauf.

9. Verfahren nach einem der Ansprüche 5 bis 8, **dadurch gekennzeichnet, dass** beim Initiieren des Verfahrens die Stellgrößen zunächst nach den Vorgaben eines Set-up Modells eingestellt werden.

10. Verfahren nach einem der Ansprüche 5 bis 9, **dadurch gekennzeichnet, dass** nach dem Initiieren des Verfahrens zur Adaption der Regelung auf einen Referenzwert des Oberflächenverlaufs der Ist-Oberflächenverlauf zunächst nur mit Messwerten eines Referenzpunkts ermittelt wird.

11. Verfahren nach einem der Ansprüche 5 bis 10, **gekennzeichnet durch** eine Adaption der online-Modelle und/oder des Set-up Modells.

12. Verfahren nach einem der Ansprüche 5 bis 11, **gekennzeichnet durch** eine Kaskaden-Regelung, die auf einer Internal Model Control (IMC) mit eingebettetem Model Predictive Control (MPC) basiert.

13. Verwendung des Verfahrens nach einem der Ansprüche 5 bis 11 zur Regelung der Stellgrößen eines Lackbeschichtungssystems.

14. Verwendung nach Anspruch 13, **dadurch gekennzeichnet, dass** bei der Regelung der Oberflächenverlauf der Trockenlackschicht und/oder der Nasslackschicht berücksichtigt wird.

15. Verwendung eines Verfahrens nach einem der vorhergehenden Ansprüche zur Ermittlung des Oberflächenverlaufs eines durch eine Vorrichtung geförderten nicht beschichteten Bandes.

## Claims

1. Method for determining the surface profile of a coated strip (5) transported through a device, by means of distance measurements, which are carried out offset to one another and transverse to the direction in which the strip runs, involving the following steps:
- the distance between the sensor (8) and the surface of the strip (5) is determined at at least one measuring point (M1, M2, M3),
- the characterizing values of a surface profile equation are calculated from the determined distance values by means of a switching Kalman filter.

2. Method according to Claim 1, **characterized in that** a distance value is determined in each case at measuring points (M1, M2, M3) distributed regularly over the strip width.

3. Method according to Claim 1 or 2, **characterized in that** after each determination of a distance value the characterizing values of a surface profile equation are calculated.

4. Method according to any one of Claims 1 to 3, **characterized in that** the surface profile equation is divided into orthogonal components.

5. Method for regulating control variables for a coating process involving the following steps:
- a target surface profile is defined,
- an actual surface profile is determined with a method according to any one of Claims 1 to 4,
- a control variable is determined by comparing a model surface profile, determined by an online-compatible model, with the actual surface profile,
- a difference in regulation is determined by comparing the control variable with the target surface profile,
- the control variable is adjusted by means of output signals from a controller, whose input signal is the difference in regulation.

6. Method according to Claim 5, **characterized in that,** for determining the difference in regulation, the target surface profile is divided into orthogonal components.

7. Method according to Claim 5 or 6, **characterized in that,** for determining the control variable, the model surface profile and the actual surface profile are divided into orthogonal components.

8. Method according to any one of Claims 5 to 7, **characterized by** the use of a multi-variable controller with an online-compatible model and dynamic optimisation involving restrictions of control variables and predicted control variable profile.

9. Method according to any one of Claims 5 to 8, **characterized in that,** when the method is initiated, the control variables are firstly adjusted according to the pre-settings of a set-up model.

10. Method according to any one of Claims 5 to 9, **characterized in that,** after the method for adapting the regulation to a reference value of the surface profile has been initiated, the actual surface profile is firstly only determined with measured values of a reference point.

11. Method according to any one of Claims 5 to 10, **characterized by** adapting the on-line models and/or the set up model.

12. Method according to any one of Claims 5 to 11, **characterized by** a cascade control, which is based on an Internal Model Control (IMC) with embedded Model Predictive Control (MPC).

13. Use of the method according to any one of Claims 5 to 11 for regulating the control variables of a lacquer coating system.

14. Use according to Claim 13, **characterized in that,** when regulating, the surface profile of the dry coat of lacquer and/or the wet coat of lacquer are considered.

15. Use of a method according to any one of the preceding claims for determining the surface profile of an uncoated strip transported through a device.

## Revendications

1. Procédé pour déterminer le profil de surface d'une bande revêtue (5) transportée par un dispositif, au moyen de mesures de distance qui sont effectuées en décalage mutuel transversalement à la direction de déplacement de la bande, lequel procédé présente les étapes suivantes :
- détermination de la distance entre le capteur (8) et la surface de la bande (5) à au moins un point de mesure (M1, M2, M3),
- calcul des valeurs caractéristiques d'une équation de profil de surface à partir de la ou des valeur(s) de distance au moyen d'un filtre de Kalman tout ou rien.

2. Procédé selon la revendication 1, **caractérisé en ce qu'**une valeur de distance est déterminée chaque fois à des points de mesure (M1, M2, M3) répartis régulièrement sur la largeur de la bande.

3. Procédé selon la revendication 1 ou 2, **caractérisé en ce qu'**après chaque détermination d'une valeur de distance, les valeurs caractéristiques d'une équation de profil de surface sont calculées.

4. Procédé selon l'une des revendications 1 à 3, **caractérisé en ce que** l'équation de profil de surface est décomposée en composantes orthogonales.

5. Procédé de régulation de variables réglantes pour un processus de revêtement, présentant les étapes suivantes :
- définition d'un profil de surface nominal,
- détermination d'un profil de surface réel au moyen d'un procédé selon l'une des revendications 1 à 4,
- détermination d'une variable réglée par comparaison d'un modèle de profil de surface déterminé par un modèle accessible en ligne avec le profil de surface réel,
- détermination d'une différence de réglage par comparaison de la variable réglée avec le profil de surface nominal,
- réglage de la variable réglante au moyen de signaux de sortie d'un régulateur dont le signal d'entrée est la différence de réglage.

6. Procédé selon la revendication 5, **caractérisé en ce que** pour déterminer la différence de réglage, le profil de surface nominal est décomposé en composantes orthogonales.

7. Procédé selon la revendication 5 ou 6, **caractérisé en ce que** pour déterminer la variable réglée, le modèle de profil de surface et le profil de surface réel sont décomposés en composantes orthogonales.

8. Procédé selon l'une des revendications 5 à 7, **caractérisé par** l'utilisation d'un régulateur multivariable avec un modèle accessible en ligne et une optimisation dynamique incluant des limitations de variables réglantes et un tracé de variable réglée prédictif.

9. Procédé selon l'une des revendications 5 à 8, **caractérisé en ce que** lors de l'initiation du procédé, les variables réglantes sont d'abord réglées selon les consignes d'un modèle de paramétrage.

10. Procédé selon l'une des revendications 5 à 9, **caractérisé en ce qu'**après l'initiation du procédé, pour adapter la régulation à une valeur de référence du profil de surface, le profil de surface réel est d'abord déterminé seulement à l'aide de valeurs de mesure d'un point de référence.

11. Procédé selon l'une des revendications 5 à 10, **caractérisé par** une adaptation des modèles en ligne et/ou du modèle de paramétrage.

12. Procédé selon l'une des revendications 5 à 11, **caractérisé par** une régulation en cascade qui est basée sur un Internal Model Control (IMC) avec Model Predictive Control (MPC) intégré.

13. Utilisation du procédé selon l'une des revendications 5 à 11 pour réguler les variables réglantes d'un système de revêtement de peinture.

14. Utilisation selon la revendication 13, **caractérisé en ce que** lors de la régulation, il est tenu compte du profil de surface de la couche de peinture sèche et/ou de la couche de peinture humide.

15. Utilisation d'un procédé selon l'une des revendications précédentes pour déterminer le profil de surface d'une bande non revêtue transportée par un dispositif.
